# EUROPÄISCHE PATENTSCHRIFT

(11) **EP 0 655 991 B1**
(45) Veröffentlichungstag und Bekanntmachung des Hinweises auf die Patenterteilung: **28.02.1996**
(21) Anmeldenummer: 93919066.6
(22) Anmeldetag: 16.08.1993
(51) Int. Cl.: C04B 28/02, C04B 28/32, B27N 3/02

(54) **HOLZWOLLE-LEICHTBAUPLATTE**
LIGHT WOOD-WOOL BUILDING PANEL
PANNEAU LEGER EN LAINE DE BOIS

(30) Priorität: 21.08.1992 DE 4227801
(43) Veröffentlichungstag der Anmeldung: 07.06.1995
(73) Patentinhaber: HERAKLITH HOLDING AKTIENGESELLSCHAFT, A-9586 Fürnitz (AT)
(72) Erfinder: THALER, Gernot, A-9500 Villach (AT); LERCHBAUMER, Dieter, A-9890 Spittal (AT); HERMANN, Dietmar, A-9702 Ferndorf 139 (AT); SEIDLER, Oskar, A-9500 Villach (AT); KUCHLER, Alfred, D-94166 Stubenberg (DE)
(74) Vertreter: Becker, Thomas, Dr., Dipl.-Ing.
(86) Internationale Anmeldenummer: EP9302175
(87) Internationale Veröffentlichungsnummer: WO9404473

(56) Entgegenhaltungen:
- DE-A- 4 017 057
- DE-C- 899 470
- FR-A- 990 566
- FR-A- 1 417 698
- US-A- 3 963 849

## Beschreibung

Die Erfindung betrifft eine Holzwolle-Leichtbauplatte (HWL) mit einem offenporigen Gerüst aus verdichteter Holzwolle, wobei die Holzwolle-Teilchen oberflächlich mit einem Bindemittel inkrustiert (beschichtet) sind.

Eine solche Holzwolle-Leichtbauplatte ist unter dem Handelsnamen "Heraklith" seit langem bekannt.

Ziel der Erfindung ist es, eine gattungsgemäße Holzwolle-Leichtbauplatte anzubieten, die ein größeres Porenvolumen gegenüber einer konventionellen "Heraklith"-Platte aufweist, also eine weniger dichte Packung an Holzwolle-Teilchen besitzt und dabei vorzugsweise weniger Bindemittel benötigt.

Der Erreichung dieses Ziels stehen folgende technische Probleme entgegen: Die Holzwolle-Teilchen, die typischerweise eine Länge von mehr als 8 cm, eine Breite von 3 bis 6 mm und eine Dicke von 0,2 bis 0,5 mm aufweisen besitzen eine völlig unregelmäßige Geometrie und sind spröde. Diese Holzwolle-Teilchen, die man auch als Holzwolle-Späne bezeichnen kann, unterscheiden sich damit grundsätzlich von Fasern, die typischerweise sehr viel kürzer und dünner sind und meist eine Dicke von nur wenigen µm aufweisen.

Während sich Fasern zum Beispiel relativ leicht zu Matten oder dergleichen komprimieren lassen, ist dies bei den genannten Holzwolle-Spänen nur sehr schwer möglich.

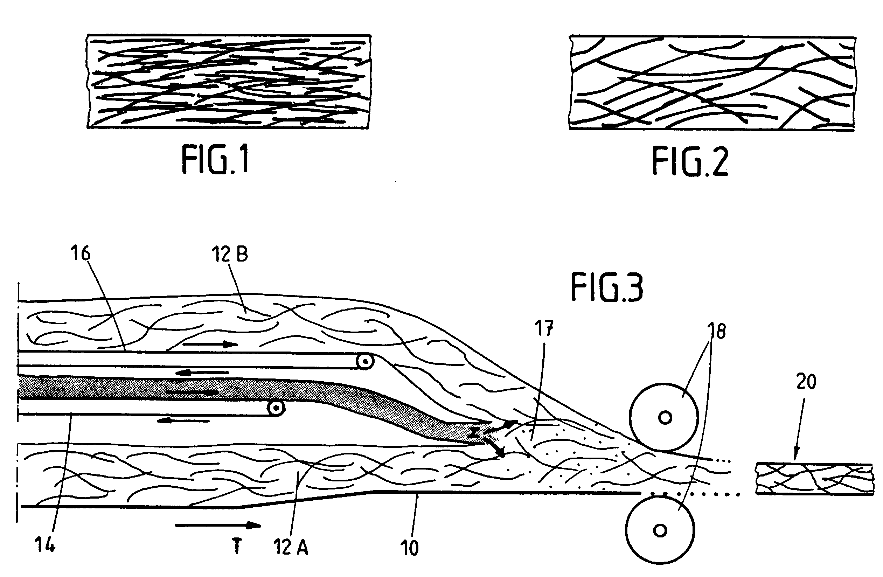

Ein besonderes Problem stellt dabei auch die "Vermischung" der Holzwolle-Teilchen mit einem Bindemittel dar. Im Stand der Technik werden die Holzwolle-Späne zunächst mit einer Bindemittel-Suspension beschichtet. Die so vorinkrustierten Späne werden dann zu einem losen Haufwerk aufbereitet und anschließend verdichtet, wobei die Verdichtung so lange aufrechterhalten wird, bis die Bindemittelbrücken an Kontaktstellen benachbarter Späne verfestigt sind. Durch die Vorinkrustierung lassen sich auf diese Weise nur relativ hoch verdichtete Platten herstellen, deren Erscheinungsbild Figur 1 schematisch wiedergibt.

Der Erfindung liegt die überraschende Erkenntnis zugrunde, daß die spröden Holzwolle-Späne sich auch in sehr viel geringerer Dichte zu einer stabilen Holzwolle-Leichtbauplatte konfektionieren lassen, sofern das die Teilchen untereinander verklebende Bindemittel als Bindemittel-Schaum bereitgestellt wird. Allein die Verwendung eines Bindemittel-Schaums anstelle einer konventionellen Bindemittel-Schlämme vermag jedoch das der Erfindung zugrundeliegende Problem nicht zu lösen. Vielmehr hat die Erfindung erkannt, daß sich die einzelnen Späne des Holzwolle-Haufwerks nur dann vollständig oberflächlich inkrustieren und in loser Konfiguration miteinander verbinden lassen, sofern der Bindemittelschaum während des Verdichtungsvorgangs in das Holzwolle-Haufwerk eingebracht wird. Der Grund ist folgender: Das Holzwolle-Haufwerk weist eine Dichte von lediglich 4 bis 10 kg/m³ auf. Mit anderen Worten: es besteht zu über 90 % aus Luft. Die Inkrustierung der Holzwolle-Späne mit dem Bindemittelschaum in einem Zwangmischer scheidet aus. Der Bindemittelschaum würde zerstört (DE 25 48 912 Al), und die Holzwolle-Späne würden zerstört.

Eine Tränkung der Holzwolle-Teilchen mit dem Bindemittel-Schaum (wie in der DE 20 04 246 C3 vorgeschlagen) läßt sich zwar bei einer relativ dichten Matte aus Fasern durchführen, nicht jedoch bei einem losen Holzwolle-Haufwerk äußerst geringerer Dichte. Auch die in der DE 20 04 246 C3 beschriebene Tränkung einer vorgefertigten Fasermatte läßt sich auf gattungsgemäße Holzwolle-Leichtbauplatten nicht übertragen, weil die Tränkung nach einer Vorkomprimierung nicht mehr die vollständige Oberflächenbeschichtung der einzelnen Holzspäne sicherstellen würde, die aber notwendig ist, um Verbindungspunkte zwischen den einzelnen Spänen zu schaffen.

Aus entsprechenden Überlegungen läßt sich auch der Vorschlag nach der DE 1 117 467 B1 nicht auf Holzwolle-Leichtbauplatten übertragen. Dort wird zunächst eine Masse aus einem Bindemittelmörtel und Fasern hergestellt, die anschließend mit Hilfe eines Schaum- oder Treibmittels aufgeschäumt wird. Bei der Verarbeitung von Holzwolle-Spänen läßt sich eine entsprechende Masse aus obengenannten Gründen nicht aufbereiten.

Einen völlig anderen Weg beschreibt deshalb die deutsche Patentschrift 899 470. Sie empfiehlt, einen schaumartig aufbereiteten Magnesiazement in Formen zu gießen und aushärten zu lassen, wobei einzelne Holzwolle-Teilchen in den Schaum eingelegt werden können.

Es ist offensichtlich, daß sich Formteile nach diesem Verfahren nur diskontinuierlich herstellen lassen. Außerdem sind die Gegenstände aus Schaummagnesitzement außerordentlich spröde, auch wenn einzelne Holzwolle-Späne oder andere Zusätze eingelegt worden sind. Technische Massenprodukte, wie Holzwolle-Leichtbauplatten, lassen sich nach diesem Verfahren nicht herstellen.

Ebenfalls durch Vermischen eines Bindemittelschaumes mit einem Füllmittel (Holzmehl) werden Estriche und andere Baustoffe nach der DE-AS 1 025 778 hergestellt. Durch die Zugabe eines Kunstharzes und/oder eines Bitumens in den Schaum soll dieser stabilisiert werden.

Erfindungsgemäß kann dagegen auf Schaumstabilisierer sowie Mischverfahren jeder Art verzichtet werden. Die Erfindung betrifft in ihrer allgemeinsten Ausführungsform eine gattungsgemäße Holzwolle-Leichtbauplatte mit einem offenporigen Gerüst aus verdichteter Holzwolle, wobei die Holzwolle-Teilchen oberflächlich mit einem Bindemittel inkrustiert sind und diese Inkrustierung eine Schaumstruktur aufweist, die sich zumindest teilweise in die Poren der Holzwolle-Leichtbauplatte hinein erstreckt und während des Formgebungsprozesses der Holzwolle-Leichtbauplatte durch Infiltration eines Bindemittelschaums in ein gleichzeitig unter Volumenreduzierung verformtes Holzwolle-Haufwerk eingebracht wurde.

Der Bindemittelschaum wird also quasi in das Holzwolle-Haufwerk "hineingedrückt", und zwar bei der Verdichtung des losen Holzwolle-Haufwerks auf das gewünschte Endmaß. Auf diese Weise kann der Bindemittelschaum zunächst in das relativ lose Holzwolle-Haufwerk eindringen, dort die einzelnen Späne oberflächlich beschichten und sich während der weiteren Verdichtung des Holzwolle-Haufwerkes in diesem optimal verteilen. Dabei wird der Bindemittel-Schaum mechanisch nur minimal beansprucht, so daß die Schaumstruktur nahezu vollständig erhalten bleibt. Die Verdichtung des Holzwolle-Haufwerks erfolgt kontinuierlich und flächig, so daß die einzelnen Späne sich während des Verdichtungsvorgangs individuell neu orientieren können, wobei die noch nicht abgebundene Schauminkrustierung wie eine elastische Oberflächenbeschichtung wirkt.

Figur 2 zeigt eine typische Struktur einer erfindungsgemäßen Holzwolle-Leichtbauplatte. Im Vergleich zum Stand der Technik nach Figur 1 ist die sehr viel losere Struktur, damit das sehr viel höhere Porenvolumen (entsprechend einer deutlich geringeren Dichte) zu erkennen.

Gleichwohl ist die Festigkeit dieser Platte überraschend hoch. Gleichzeitig besitzt die Platte hervorragende schalltechnische Eigenschaften.

Die lose Struktur optimiert die Verwendung der Platte für Isolier- und Dämmzwecke.

Der Porenraum zwischen dem Gerüst, welches von den verdichteten Holzwolle-Teilchen gebildet wird, kann mehr oder weniger vollständig mit dem erhärteten Bindemittel-Schaum ausgefüllt sein. Der Füllungsgrad wird anhand der gewünschten Produkteigenschaften und Verwendung gewählt. Dies kann zum Beispiel durch entsprechende Zusatzmittel, die dem Bindemittel beigemischt werden, und die die Erhärtungszeit des Schaums beziehungsweise dessen Porenstruktur verändern, beeinflußt werden. Derartige Zusatzmittel (Verzögerer, Beschleuniger, Porenbildner) sind im Stand der Technik bekannt und werden deshalb hier nicht weiter beschrieben.

Dies gilt auch für das verwendete Bindemittel selbst, das ebenso aus einem hydraulischen Zement wie aus einem Sorelzement aufgebaut sein kann. Schaumbildner, zum Beispiel Seifen, Tenside, Sulfonate (zum Beispiel Lignosulfonate), aber auch Metalle oder Metallkombinationen in Form von Pulvern, wie Aluminium/Zink oder Magnesium sowie Wasserstoffperoxid gehören zum Stand der Technik und werden hier nicht näher beschrieben.

Ihre Auswahl erfolgt nach einer Ausführungsform derart, daß der erhärtete Bindemittel-Schaum eine Dichte zwischen 100 und 700 g/l aufweist und/oder Poren mit einem mittleren Durchmesser zwischen 0,2 und 5 mm besitzt.

Das typische Gewichtsverhältnis Holzwolle : Bindemittel-schaum liegt bei 1 : 6 bis 2 : 1.

Je nach Anwendungsbereich kann ein Bindemittelschaum verwendet werden, dessen Schaumgerüst zeitabhängig zerfällt. Die Stabilität der Holzwolle-Leichtbauplatte ist dann in erster Linie von den Bindemittelkontakten der Späne untereinander abhängig.

Es kann aber auch eine ganz gezielt aufgebaute Schaummatrix eingestellt werden, und zwar auch gezielt in einzelnen Abschnitten der Platte. So ist es ohne weiteres möglich, vor allem die Oberfläche der Platte mit einer dünnen Schaum-Beschichtung auszubilden, so daß - rein optisch - die Platte eine "durchgehende" Oberfläche aufweist, die anschließend zum Beispiel angestrichen oder weiter beschichtet werden kann.

Die beschriebene Holzwolle-Leichtbauplatte läßt sich diskontinuierlich und kontinuierlich herstellen. In jedem Fall wird auf mindestens einen Flächenabschnitt eines losen Holzwolle-Haufwerks ein Bindemittelschaum aufgegeben, der anschließend unter gleichzeitiger Volumenreduzierung des Holzwolle-Haufwerks in dieses hinein infiltriert. Dabei wird die so komprimierte und mit dem Bindemittelschaum infiltrierte Platte bis zum Erreichen einer Eigenfestigkeit des Bindemittelschaums volumenstabil gehalten.

Ein kontinuierliches Verfahren läßt sich besonders einfach erreichen, wenn der Bindemittelschaum auf ein kontinuierlich als Band antransportiertes Holzwolle-Haufwerk aufgegeben und danach unter Verdichtung des Holzwolle-Haufwerks (bis auf das gewünschte Endmaß der Platte) in dieses infiltriert.

Eine weitere Optimierung des Verfahrens besteht darin, daß der Bindemittelschaum zwischen zwei, kontinuierlich als Bänder antransportierte Holzwolle-Haufwerke aufgegeben und die Bänder danach unter gleichzeitiger Infiltration des Bindemittelschaums in das Holzwolle-Haufwerk gegeneinander geführt und zu einer einheitlichen Platte verdichtet werden.

In diesem Fall dringt der Schaum also quasi "isotrop" in das Holzwolle-Haufwerk auf der einen wie auf der anderen Seite ein, die gleichzeitig miteinander zu einer einheitlichen Platte verbunden werden.

Die nachfolgende Figurenbeschreibung skizziert dieses Herstellungsverfahren im einzelnen.

Dabei ist Figur 3 zur besseren Übersichtlichkeit rein schematisch gestaltet.

Auf einem ersten Transportband 10 wird ein loses Holzwolle-Haufwerk 12a in Pfeilrichtung T antransportiert.

Mit Abstand darüber verläuft ein zweites Transportband 14, welches einen Bindemittelschaum 16 aufnimmt und am Ende des Transportbandes 14 auf das lose Holzwolle-Haufwerk 12a aufgibt.

Wiederum im Abstand darüber ist ein drittes Transportband 16 angeordnet, über das ein zweiter Teilstrom 12b des Holzwolle-Haufwerks antransportiert wird, welcher auf das Haufwerk 12a und den darauf aufliegenden Bindemittelschaum 16 aufgegeben wird, wobei es zu einer ersten Infiltration des Bindemittelschaums in die beiden Holzwolle-Haufwerke 12a, b kommt (Pfeile I).

In der Folge wird der zunächst noch aus zwei losen Holzwolle-Haufwerken 12a, b und dazwischen einliegendem Bindemittel-Schaum 17 bestehende Materialstrom über entsprechende Walzen (schematisch mit 18 dargestellt) kontinuierlich verdichtet, wobei während dieser Verdichtung der Schaum 16 in die Hohlräume der Holzwolle-Haufwerke 12a, b eindringt und die einzelnen Späne oberflächlich beschichtet (inkrustiert) sowie das entsprechende Porenvolumen zwischen den Spänen ausfüllt.

Die Verdichtung erfolgt dann bis auf das gewünschte Endmaß (hier bei 20 schematisch dargestellt), bis der Bindemittel-Schaum soweit abgebunden ist, daß die hergestellte Holzwolle-Leichtbauplatte eine ausreichende Eigenstabilität aufweist, um entnommen und weiterbearbeitet werden zu können. Die weiteren Bearbeitungsschritte sind dabei vor allem der Zuschnitt auf das gewünschte Endmaß sowie gegebenenfalls ein Anstrich der Oberfläche und/oder die Herstellung von Verbundteilen durch Aufkleben anderer Platten oder dergleichen.

## Patentansprüche

1. Holzwolle-Leichtbauplatte mit
1.1 einem offenporigen Gerüst aus verdichteter Holzwolle, wobei
1.2 die Holzwolle-Teilchen oberflächlich mit einem Bindemittel inkrustiert sind,
gekennzeichnet durch folgende Merkmale:
1.3 die Inkrustierung hat eine Schaumstruktur, die sich zumindest teilweise in die Poren der Holzwolle-Leichtbauplatte erstreckt und
1.4 während des Formgebungsprozesses der Holzwolle-Leichtbauplatte durch Infiltration eines Bindemittelschaums in ein gleichzeitig unter Volumenreduzierung verformtes Holzwolle-Haufwerk eingebracht wurde.

2. Leichtbauplatte nach Anspruch 1, bei der der Porenraum zwischen dem Gerüst aus verdichteten Holzwolle-Teilchen vollständig mit dem erhärteten Bindemittelschaum ausgefüllt ist.

3. Leichtbauplatte nach Anspruch 1 oder 2, bei der der erhärtete Bindemittelschaum eine Dichte zwischen 100 und 700 g/l aufweist.

4. Leichtbauplatte nach einem der Ansprüche 1 bis 3, bei der der erhärtete Bindemittelschaum Poren mit einem mittleren Durchmesser zwischen 0,2 und 5 mm aufweist.

5. Leichtbauplatte nach einem der Ansprüche 1 bis 4, bei dem das Gewichtsverhältnis Holzwolle : Bindemittelschaum 1 : 6 bis 2 : 1 beträgt.

6. Leichtbauplatte nach einem der Ansprüche 1 bis 5 mit einer, die Oberfläche(n) der Holzwolle-Leichtbauplatte abdeckenden Beschichtung aus erhärtetem Bindemittelschaum.

7. Verfahren zur Herstellung einer Holzwolle-Leichtbauplatte nach einem der Ansprüche 1 bis 6 mit folgenden Schritten:
7.1 auf mindestens einen Flächenabschnitt eines losen Holzwolle-Haufwerks wird ein Bindemittelschaum aufgegeben,
7.2 der Bindemittelschaum wird anschließend unter gleichzeitiger Volumenreduzierung des Holzwolle-Haufwerks auf das gewünschte Endmaß der Holzwolle-Leichtbauplatte in dieses hinein infiltriert,
7.3 die so komprimierte und mit dem Bindemittelschaum infiltrierte Holzwolle-Leichtbauplatte wird bis zum Erreichen einer Eigenfestigkeit (nach Abbinden des Bindemittelschaums) volumenstabil gehalten.

8. Verfahren nach Anspruch 7, bei dem der Bindemittelschaum auf ein kontinuierlich als Band antransportiertes Holzwolle-Haufwerk aufgegeben und danach unter Verdichtung des Holzwolle-Haufwerks auf das gewünschte Endmaß der Holzwolle-Leichtbauplatte in dieses infiltriert.

9. Verfahren nach Anspruch 7 oder 8, bei dem der Bindemittelschaum zwischen zwei, kontinuierlich als Bänder antransportierte Holzwolle-Haufwerke aufgegeben und die Bänder danach unter gleichzeitiger Infiltration des Bindemittelschaums in das Holzwolle-Haufwerk gegeneinander geführt und auf das gewünschte Plattenendmaß verdichtet werden.

10. Verfahren nach einem der Ansprüche 7 bis 9, bei dem ein Bindemittelschaum eingesetzt wird, der die Erhärtungszeit verändernde und/oder die Porenstruktur beeinflussende Stoffe enthält.

## Claims

1. A wood-wool building slab with
1.1 a skeleton of compressed wood-wool, having open pores,
1.2 the wood-wool particles being incrusted on the surface with a binder,
characterized by the following features:
1.3 the incrustation has a foam structure extending at least in part into the pores of the wood-wool building slab, and
1.4 having been introduced during the process of forming the wood-wool building slab by infiltration of a binder foam into a heap of wood-wool being deformed simultaneously under volume reduction.

2. The building slab according to claim 1, wherein the pore volume between the skeleton of compressed wood-wool particles is completely filled with the set binder foam.

3. The building slab according to claim 1 or 2, wherein the set binder foam has a density between 100 and 700 g/l.

4. The building slab according to anyone of claims 1 to 3, wherein the set binder foam has pores having a mean diameter between 0,2 and 5 mm.

5. The building slab according to anyone of claims 1 to 4, wherein the weight ratio wood-wool : binder foam is from 1 : 6 to 2 : 1.

6. The building slab according to anyone of claims 1 to 5 having a coating of set binder foam, covering the surface(s) of the wood-wool building slab.

7. A method for producing a wood-wool building slab according to anyone of claims 1 to 6, with the following steps:
7.1 a binder foam is deposited onto at least a surface portion of a loose heap of wood-wool,
7.2 the binder foam is infiltrated into the heap of wood-wool under simultaneous volume reduction thereof to the desired final dimension of the wood-wool building slab,
7.3 the wood-wool building slab compressed in such way and infiltrated with the binder foam is held at a stable volume until reaching an inherent stability (after setting of the binder foam).

8. The method according to claim 7, wherein the binder foam is deposited onto a heap of wood-wool being delivered continuously as a band, and then infiltrates into the heap of wood-wool under compression thereof to the desired final dimension of the wood-wool building slab.

9. The method according to claim 7 or 8, wherein the binder foam is deposited between two heaps of wood-wool being delivered continuously as bands, and the bands are then guided towards each other and compressed to the desired final dimension of the slab, under simultaneous infiltration of the binder foam into the heap of wood-wool.

10. The method according to anyone of claims 7 to 9, wherein a binder foam is used, which contains materials varying the duration of setting and/or affecting the pore structure.

## Revendications

1. Panneau de construction léger en laine de bois comprenant
1.1 une ossature à pores ouverts en laine de bois comprimée, dans lequel
1.2 les particules de laine de bois sont incrustées superficiellement avec un liant, caractérisé par les caractéristiques suivantes :
1.3 l'incrustation présente une structure de mousse qui s'étend au moins partiellement dans les pores du panneau de construction léger en laine de bois et
1.4 a été introduite dans une texture de laine de bois déformée par réduction de volume simultanée pendant le procédé de fabrication du panneau de construction léger en laine de bois par infiltration d'une mousse de liant.

2. Panneau de construction léger selon la revendication 1, dans lequel l'espace poreux entre l'ossature en particules de laine de bois comprimées est entièrement rempli avec de la mousse de liant durcie.

3. Panneau de construction léger selon la revendication 1 ou 2, dans lequel la mousse de liant durcie présente une densité entre 100 et 700 g/l.

4. Panneau de construction léger selon l'une quelconque des revendications 1 à 3, dans lequel la mousse de liant durcie présente des pores d'un diamètre moyen entre 0,2 et 5 mm.

5. Panneau de construction léger selon l'une quelconque des revendications 1 à 4, dans lequel le rapport de poids laine de bois/mousse de liant va de 1/6 à 2/1.

6. Panneau de construction léger selon l'une quelconque des revendications 1 à 5 avec un revêtement en mousse de liant durcie couvrant la ou les surfaces (s) du panneau de construction léger en laine de bois.

7. Procédé de fabrication d'un panneau de construction léger en laine de bois selon l'une quelconque des revendications 1 à 6, comprenant les étapes suivantes :
7.1 une mousse de liant est appliquée sur au moins une partie de surface d'une texture de laine de bois en vrac,
7.2 la mousse de liant, avec réduction de volume simultanée de la texture de laine de bois jusqu'à la dimension définitive du panneau de construction léger en laine de bois, est ensuite infiltrée dans celui-ci
7.3 le panneau de construction léger en laine de bois ainsi comprimé et infiltré par la mousse de liant est maintenu à un volume stable jusqu'à atteindre une solidité inhérente (après durcissement de la mousse de liant).

8. Procédé selon la revendication 7, dans lequel la mousse de liant est appliquée sur une texture de laine de bois, alimentée en continu sous forme de bande, et ensuite infiltrée dans celle-ci, avec compression de la texture de laine de bois jusqu'à la dimension définitive souhaitée.

9. Procédé selon la revendication 7 ou 8, dans lequel la mousse de liant est appliquée entre deux textures de laine de bois, alimentées en continu sous forme de bandes, et les bandes sont ensuite amenées l'une contre l'autre, avec infiltration simultanée de la mousse de liant dans la texture de laine de bois, et comprimées jusqu'à la dimension de panneau définitive souhaitée.

10. Procédé selon l'une quelconque des revendications 7 à 9, dans lequel une mousse de liant est utilisée qui contient des substances modifiant le temps de durcissement et/ou influençant la structure des pores.
